# EUROPEAN PATENT SPECIFICATION

(11) **EP 2 884 325 B1**
(45) Date of publication and mention of the grant of the patent: **22.02.2017**
(21) Application number: 13382512.5
(22) Date of filing: 13.12.2013
(51) Int. Cl.: G02B 21/32, G21K 1/00

(54) **Optical device for placement in the optical train of a microscope and method of manufacturing such a device**
Optische Vorrichtung zur Platzierung im optischen System eines Mikroskops und Verfahren zur Herstellung einer solchen Vorrichtung
Dispositif optique destiné à être placé dans le trajet optique d'un microscope et procédé de fabrication d'un tel dispositif

(43) Date of publication of application: 17.06.2015
(73) Proprietor: Impetux Optics, S.L., 08034 Barcelona (ES)
(72) Inventor: Farré FLAQUER, Arnau, 07194 PUIGPUNYENT (ES); Marsà Samper, Ferran, 08028 BARCELONA (ES)
(74) Representative: ZBM Patents - Zea, Barlocci & Markvardsen

(56) References cited:
- WO-A2-2005/029139
- US-A1- 2007 069 119
- US-A1- 2012 068 059

## Description

The invention is related to an optical device for placement in the optical train of an optical microscope in order to detect light momentum changes to measure optical forces acting on a microscopical sample located in a suspending medium and placed on the microscope's stage. The device comprises a collector having a numerical-aperture greater than the refraction index of said suspending medium to collect the light scattered and not scattered by the sample, a light sensor placed at or near an optical equivalent of the back focal plane of the collector, and a first optical relay to project the light collected by the collector onto the light sensor

The invention is also related to a method of manufacturing such a device.

### BACKGROUND ART

Back focal plane (BFP) interferometry is employed to measure the position of a microscopical sample trapped in an optical trap, e.g. constituted by optical tweezers. To put an example, when the size of the sample is smaller than the wavelength of the trapping light, normally a laser, the sample behaves as a dipole and the light passing therethrough is scattered, creating a new spherical wave. The light exiting the optical trap has two different contributions: the light scattered by the sample and the light not scattered by it,, the former indicating the change of momentum undergone by the deflected light and the latter being the light that don't interact with the sample; these two contributions are collected by a collection lens (collector) and interfere at the BFP thereof, where it forms a significative light pattern.

A common way of determining the sample position involves a light sensor, e.g. a quadrant photodiode (QPD), for analysing the light exiting the optical trap, said light being collected with said collector, which is normally the condenser that is used to illuminate the sample, i.e., it is actually a collector in the trapping-light path and a condenser in the illumination path of the microscope. A dichroic mirror, located after the condenser, reflects the light coming from the trap yet is no obstacle to the pass of the illumination light. The light pattern at the BFP of the collector is projected onto the QPD by an auxiliary relay lens located after the dichroic mirror and outside the illumination path of the microscope, and the signal from the QPD allows the computation of the sample position.

Actually, a variant of such a method may directly measure the force acting on the sample, which is often the really interesting result, but to achieve this the collector must capture the maximum fraction of the light scattered and not scattered by the trapped sample. A few special requirements have thus to be met to use the method for the direct measurement of forces, notably:
- the light sensor should be a position sensitive detector instead of a QPD;
- the numerical aperture of the collector must be greater than the refraction index of the medium in which the sample is suspended in order to collect a maximum fraction of the scattered and no-scattered light;
- the collector should be an aplanatic lens (i.e. it should fulfil the Abbe sine condition) in order to minimise the optical aberration of the lens.

These requirements are related to collecting most of the photons exiting the optical trap and to obtaining significative light patterns at the collector's BFP, respectively.

US 2012/0068059, which is hereby incorporated by reference, discloses an apparatus for measuring optical forces acting on a trapped sample, and a method directed to trap said sample with a single light beam. The apparatus and method involves the use of an aplanatic collection lens (collector) with a numerical aperture greater than or equal to the refraction index of the medium in which the sample is suspended. A light sensor is positioned at or near the back focal plane of the collector, or at an optical equivalent thereof, thus being able to produce measurements of the optical force acting on the sample. This method can render force measurements insensitive to the sample's geometrical and optical properties, and the apparatus can be calibrated by a substantially invariant parameter.

But this method is quite sensitive to the distance between the sample and the collector because the effective numerical aperture thereof fastly decreases with the increase of said distance. Said distance determines the momentum change of the trapping-light (laser) beam because it regulates the amount of light captured by the collector. The sample must lie at or near the front focal plane of the collector, so that the beam exiting the collector is collimated or almost collimated.

The correct height of the collector over the trapped sample, i.e. that for which the fraction of collected light is maximum, must show a particular light pattern at the collector's BFP the analysis of which is a difficult task, only available to a seasoned photonic expert, so that only such an expert can confidently position the collector over the sample, whereby to position the apparatus remains a hurdle to the kind of user that would benefit most from said method, for example, but not only, a biosciences researcher.

### SUMMARY OF THE INVENTION

It is an object of the present invention to overcome the mentioned drawbacks.

In a first aspect, an optical device for placement in the optical train of an optical microscope, in order to detect light momentum changes to measure optical forces acting on a microscopical sample located in a suspending medium and placed on the microscope's stage, comprises a collector having a numerical-aperture greater than the refraction index nₘ of said suspending medium to collect the light scattered and not scattered by the sample, a light sensor placed at or near an optical equivalent of the back focal plane of the collector, a first optical relay to project the light collected by the collector onto the light sensor, a second optical relay placed along an illumination path, for example the illumination path of the microscope, and a reference element also placed along said illumination path, the distance between the second optical relay and the reference element being such that, when the reference element is in sharp focus as seen through the microscope, the diameter of the light pattern projected on the light sensor is 2·f_{d}·nₘ, where f_{d} is the focal length of the device, which means that the height of the device over the sample is correctly set in the sense that the fraction of collected light is maximum.

So, with the device installed in a microscope in place of the conventional condenser, the user can easily adjust the height of the device with respect to the sample located on the microscope's stage, until the reference element is seen in sharp focus through the microscope, and no special expertise is thus needed to set the device, and in particular the collector thereof, at a correct height over the sample.

The ingenuity underlying this aspect of the invention lies in having the second optical relay precisely positioned when manufacturing the device, so that seeing the reference element sharply focused through the microscope is equivalent to having most light exiting the optical trap collected by the collector. This leads to a further aspect of the invention, whereby a method of manufacturing the device comprises placing a reference mark at or near the back focal plane of the collector or an optical equivalent thereof, so that the pattern of the light collected at said back focal plane matches said reference mark. Since said light pattern contains information about the amount of light collected, and therefore about the ultimate quality of the measurements, by properly designing the reference mark the difficult task of evaluating the fraction of the light actually collected can be made equivalent to the easy task of correctly positioning the second optical relay and the reference element in the device with the help of the reference mark, and, when in use, the difficult task of setting the correct height of the device over the sample is made equivalent to the easy task of focusing the reference element while looking at it through the microscope.

In some embodiments, the method of manufacture comprises the step of adjusting the distance between the second optical relay and the reference element so that the pattern of the light collected at said back focal plane matches the reference mark.

Other inventive features are apparent from the appended claims and the following description.

The light pattern at the back focal plane of the collector can be obtained by means of a video camera positioned in place of the light sensor. Said light pattern contains information on the amount of light collected by the device. In particular, the diameter of the light pattern is related to the angle of the light cone captured by the collector. For the correct axial position of the device, the light pattern should have a diameter equivalent to an angle of 90°. This would indicate that all the light leaving the optical trap is captured by the device.

To obtain a precise relation between the angle of said cone, 2α, and the distance r on the back focal plane of the collector with respect to the optical axis thereof, the aberration of the collection have to be characterized. In case the collector perfectly follows the Abbe sine condition (required to having a correct decomposition of the beam in its fundamental momenta), said relation is given by r = f·n_{medmm}·sinα, wherein f corresponds to the focal length of the collector. The height of the device over the sample for which the fraction of collected light is maximum must show a pattern with a diameter given by d = 2r = 2·f·n·sinα ∼ 2·f·n·sin90° = 2·f·n. For the device as a whole, the above-indicated diameter of 2·f_{d}·nₘ on the light sensor plane is derived.

### BRIEF DESCRIPTION OF THE DRAWINGS

Some particular embodiments of the present invention will be described in the following, only by way of non-limiting example, with reference to the appended drawings, in which:
figure 1 schematically shows the prior art;
figure 2 schematically shows an embodiment of the invention;
figure 3 schematically shows another embodiment;
figure 4 schematically shows yet another embodiment; and
figure 5 shows a schematic housing for the embodiment of fig. 4.

### DESCRIPTION OF PARTICULAR EMBODIMENTS

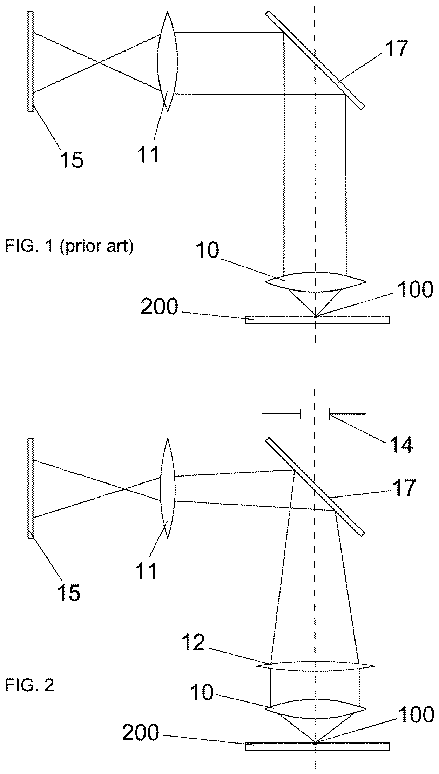

In the prior art (fig. 1) the sample 100 is put in a chamber 200 filled with a suspending medium, where a laser beam (not shown) traps the sample in an optical trap. In the figures, the lines between the elements of the device represent the laser beam that exits the optical trap and goes through said different optical elements.

Figure 1 (prior art) shows the light exiting the optical trap and going through a collector 10 (collection lens or lenses), being redirected by a dichroic mirror 17, and being projected onto a light sensor 15 by a first optical relay 11 (which may be a group of optical elements).

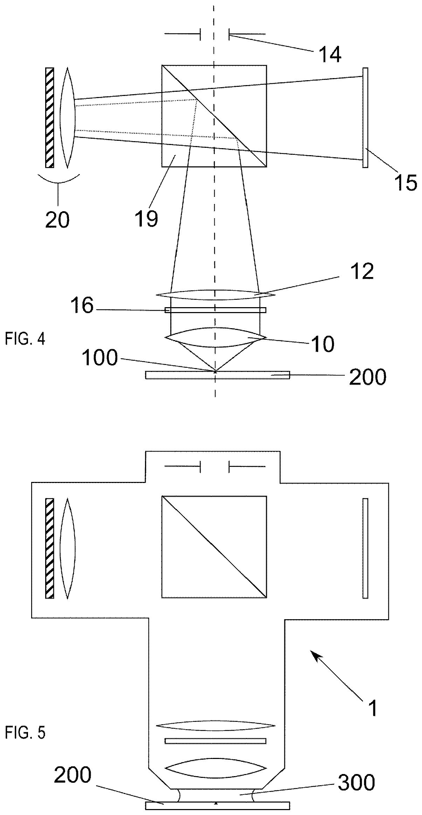

The embodiment shown in fig. 2 incorporates a second optical relay 12 placed along the illumination path of the microscope; said illumination path is represented by the dashed vertical line of the figures, which is also the optical axis of both the collector 10 and the second optical relay 12. An iris or reference element 14 is included near the top end of the device 1 (fig. 5), where the latter is connected to the optical train of the microscope (not shown). In the figures, the microscope's illumination light comes from the top and the trapping laser (not shown) comes from the bottom; the collector 10 acts as a collector for the light exiting the optical trap and as a condenser for the microscope's light. The dichroic mirror 17 reflects the light collected by the collector 10 without perturbing the illumination light.

The first optical relay 11 is outside the illumination path of the microscope and has a short focal length in order to reduce the optical path and thus limit the footprint of the whole device. This typically introduces optical aberrations in the beam and therefore distorts the light pattern projected onto the light sensor.

The second optical relay 12 is at or near the back focal plane (BFP) of the collector. Throughout the present application the term "near" means "substantially at" in an optical sense, or, numerically expressed, within a few millimetres, say five, except precisely for the second optical relay, which can be at a distance of up to 1 cm from the BFP of the collector.

The second optical relay 12 introduces an amount of spherical aberration that compensates for the spherical aberration introduced by the first optical relay 11. The resulting image projected onto the position sensitive detector is thus little deviated from the Abbe sine condition, required for the device to provide a correct measurement of the light momentum change, and so the force detection capability of the device remains substantially unaltered.

The second optical relay 12 has a diameter larger than 2·f_{c}·nₘ, where f_{c} is the focal length of the collector and nₘ is the refraction index of the suspending medium. As explained above, said value corresponds to the diameter of the light pattern at the BFP of the collector 10 when the device is at the correct distance from the sample and all the forward-scattered light (even those photons propagating at almost 90°) is captured by the collector.

The second optical relay 12 decreases the width of the laser beam so vignetting along the optical path of the laser is reduced, even when optics with a diameter smaller than the light pattern at the BFP of the collector 10 is used. This enormously simplifies the design of the device.

The iris 14 is placed along the illumination path, above the dichroic mirror 17, and at such a distance from the second optical relay 12 that the latter, along with the condenser 10, projects an image of the iris on the sample plane. The iris 14 is positioned at or near the focal plane of the second optical relay 12.

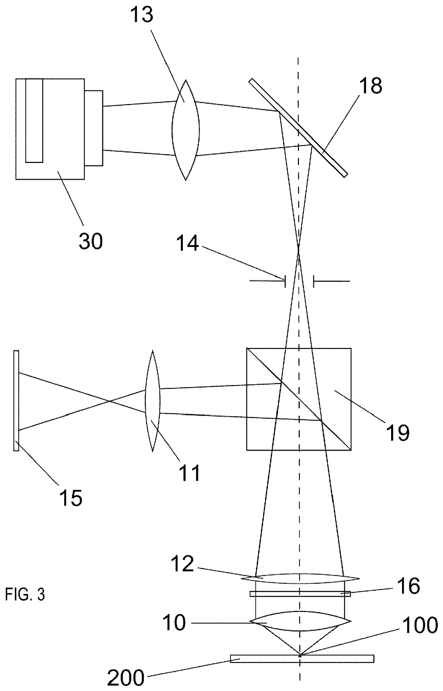

Figure 3 shows a set-up for adjusting the position of the second optical relay 12. The dichroic mirror 17 has been replaced by a beamsplitter 19, and the set-up further includes another dichroic mirror 18, a third optical relay 13 and a video camera 30 positioned at an optical equivalent of the light sensor 15. The third optical relay 13 is optically equivalent to the first optical relay 11 and produces a second image of the light distribution at or near the BFP of the collector 10 onto the video camera.

A reference mark 16, in the form of a plate with a circular mark of diameter 2·f_{c}·nₘ, is placed along the illumination path between the collector 10 and the second optical relay 12, at or near the BFP of the collector 10, so that the distance between the sample and the device corresponds to the separation where the light pattern at the BFP of the collector fills the entire circular mark.

The second optical relay 12 can be moved along the illumination path by means a mechanism (not shown) to set the correct distance to the iris 14.

During manufacture of the device 1, the process of positioning the second optical relay 12 is based on the fact that the diameter and position of the reference mark 16 provide for a maximum fraction of the light exiting the optical trap to be captured by the collector 10 when the light pattern at the BFP thereof has the same diameter (2·f_{c}·nₘ), and comprises the following steps:
- Changing the height of the device 1 over the sample 100 until the light pattern at the BFP of the collector 10 fills the reference mark 16.
- Adjusting the height of the second optical relay 12 in the device until the image of the iris 14 is clearly observed at the sample plane with the microscope.

The dichroic mirror 18, the third optical relay 13 and the video camera 30 are not part of the device 1 and are just used during the manufacture thereof. In an alternative of the manufacture method, the video camera 30 takes the place of the light sensor 15 and the dichroic mirror 18 and third optical relay 13 are dispensed with.

The reference mark 16 may or may not be left in the device 1, as it neither hampers nor intervenes in the use thereof.

When using the device 1, to set it at the correct height over the sample 100 all the user has to do is adjust the device along the optical train of the microscope until the iris 14 is in sharp focus as seen through the microscope.

To make the device 1 more compact in order to fit it more easily onto the microscope, the first optical relay 11 can be replaced by a concave mirror 20 and the light sensor 15 can be placed at the other side thereof with respect to the axis represented by the dashed line in figure 4. This results in the generally T-shaped device 1 shown in figure 5, which also shows an oil interface 300 between the chamber 200 and the device 1.

Although only particular embodiments of the invention have been shown and described in the present specification, the skilled man will be able to introduce modifications and substitute any technical features thereof with others that are technically equivalent, depending on the particular requirements of each case, without departing from the scope of protection defined by the appended claims.

## Claims

1. Optical device for placement in the optical train of an optical microscope in order to detect light momentum changes to measure optical forces acting on a microscopical sample (100) located in a suspending medium and placed on the microscope's stage, the device comprising a collector (10) having a numerical-aperture greater than the refraction index nₘ of said suspending medium to collect the light scattered and not scattered by the sample, a light sensor (15) placed at or near an optical equivalent of the back focal plane of the collector, and a first optical relay (11) to project the light collected by the collector onto the light sensor, **characterized in that** the device also comprises a second optical relay (12) placed along an illumination path and a reference element placed along said illumination path, the distance between the second optical relay and the reference element being such that, when the reference element is in sharp focus as seen through the microscope, the diameter of the light pattern projected on the light sensor is 2·f_{d}·nₘ, where f_{d} is the focal length of the device.

2. Device according to claim 1, wherein the reference element is an iris (14) that is in sharp focus as seen through the microscope when the height of the device over the sample is correctly set.

3. Device according to claim 1 or 2, wherein the second optical relay is placed at or near the back focal plane of the collector.

4. Device according to claim 3, wherein the diameter of the second optical relay is larger than 2·f_{c}·nₘ, where f_{c} is the focal length of the collector.

5. Device according to any of the preceding claims, wherein the first optical relay lies outside the illumination path of the microscope.

6. Device according to any of the preceding claims, wherein the two optical relays are such that the spherical aberrations introduced by them are mutually compensated, at least partly.

7. Device according to any of the preceding claims, the device being generally T-shaped, the line of symmetry of the T being parallel to the illumination path of the microscope between the second optical relay and the reference element.

8. Device according to claim 7, wherein the first optical relay comprises a concave mirror.

9. Device according to claim 8, wherein the first optical relay and the light sensor are at opposite sides of said line of symmetry.

10. Method of manufacturing a device according to any of claims 1 to 9, comprising the step of placing a reference mark (16) at or near the back focal plane of the collector or an optical equivalent thereof, so that the pattern of the light collected at said back focal plane matches said reference mark.

11. Method according to claim 10, comprising the step of adjusting the distance between the second optical relay and the reference element so that the pattern of the light collected at said back focal plane matches the reference mark.

12. Method according to claim 11, wherein said adjusting is made by moving the second optical relay along its optical axis.

13. Method according to any of claims 10 to 12, wherein the reference mark is a plate with a circular mark of diameter equal to 2·f_{c}·nₘ.

14. Method according to any of claims 10 to 13, comprising the steps of:
· placing a third optical relay (13) at or near an optical equivalent of the first optical relay;
· placing a video camera at or near an optical equivalent of the light sensor, so that the third optical relay projects an image of the light pattern at the back focal plane of the collector onto the video camera.

15. Method according to claim 14, comprising the step of providing a beamsplitter (19) between the three optical relays.

## Patentansprüche

1. Optische Vorrichtung zur Anordnung im optischen System eines optischen Mikroskops, um Lichtimpulsänderungen zu ermitteln, um optische Kräfte zu messen, die auf eine mikroskopische Probe (100) wirken, die sich in einem Suspensionsmedium befindet und auf dem Mikroskoptisch angeordnet ist, wobei die Vorrichtung einen Kollektor (10) umfasst, der eine numerische Apertur größer als der Brechungsindex nₘ des Suspensionsmediums hat, um das von der Probe gestreute und nicht gestreute Licht zu sammeln, ein Lichtsensor (15) umfasst, der an oder in der Nähe von einem optischen Äquivalent der hinteren Brennebene des Kollektors angeordnet ist, und ein erstes optisches Relais (11) umfasst, um das vom Kollektor gesammelte Licht auf den Lichtsensor zu projizieren, **dadurch gekennzeichnet, dass** die Vorrichtung auch ein zweites optisches Relais (12) umfasst, das entlang eines Beleuchtungsgangs angeordnet ist und ein entlang des Beleuchtungsgangs angeordnetes Bezugselement umfasst, wobei der Abstand zwischen dem zweiten optischen Relais und dem Bezugselement derart ist, dass, wenn das Bezugselement scharf durch das Mikroskop erscheint, der Durchmesser des auf dem Lichtsensor projizierten Lichtmusters 2·f_{d}·nₘ beträgt, worin f_{d} die Brennweite der Vorrichtung ist.

2. Vorrichtung nach Anspruch 1, wobei das Bezugselement eine Iris (14) ist, die durch das Mikroskop scharf erscheint, wenn die Höhe der Vorrichtung über der Probe richtig eingestellt ist.

3. Vorrichtung nach Anspruch 1 oder 2, wobei das zweite optische Relais auf oder in der Nähe der hinteren Brennebene des Kollektors angeordnet ist.

4. Vorrichtung nach Anspruch 3, wobei der Durchmesser des zweiten optischen Relais größer als 2·f_{c}·nₘ ist, worin f_{c} die Brennweite des Kollektors ist.

5. Vorrichtung nach einem der vorhergehenden Ansprüche, wobei das erste optische Relais außerhalb des Beleuchtungsgangs des Mikroskops liegt.

6. Vorrichtung nach einem der vorhergehenden Ansprüche, wobei die zwei optischen Relais derart sind, dass die durch diese gegebenen sphärischen Aberrationen, zumindest teilweise, gegenseitig kompensiert werden.

7. Vorrichtung nach einem der vorhergehenden Ansprüche, wobei die Vorrichtung im Allgemeinen T-förmig ist, wobei die Symmetrielinie der T-Form parallel zum Beleuchtungsgang des Mikroskops zwischen dem zweiten optischen Relais und dem Bezugselement ist.

8. Vorrichtung nach Anspruch 7, wobei das erste optische Relais einen Konkavspiegel umfasst.

9. Vorrichtung nach Anspruch 8, wobei das erste optische Relais und der Lichtsensor an gegenüberliegenden Seiten der Symmetrielinie angeordnet sind.

10. Verfahren zur Herstellung von einer Vorrichtung nach einem der Ansprüche 1 bis 9, umfassend den Schritt, in dem eine Bezugsmarkierung (16) auf oder in der Nähe der hinteren Brennebene des Kollektors oder eines optischen Äquivalents davon angeordnet wird, so dass der Muster des auf der hinteren Brennebene gesammelten Lichts der Bezugsmarkierung entspricht.

11. Verfahren nach Anspruch 10, umfassend den Schritt, in dem der Abstand zwischen dem zweiten optischen Relais und dem Bezugselement angepasst wird, so dass der Muster des auf der hinteren Brennebene gesammelten Lichts der Bezugsmarkierung entspricht.

12. Verfahren nach Anspruch 11, wobei die Anpassung dadurch erreicht wird, dass das zweite optische Relais entlang dessen optischer Achse bewogen wird.

13. Verfahren nach einem der Ansprüche 10 bis 12, wobei die Bezugsmarkierung eine Scheibe mit einer kreisförmigen Markierung ist, deren Durchmesser 2·f_{c}·nₘ beträgt.

14. Verfahren nach einem der Ansprüche 10 bis 13 umfassend folgende Schritte:
• das Anordnen von einem dritten optischen Relais (13) an oder in der Nähe von einem optischen Äquivalent des ersten optischen Relais;
• das Anordnen von einer Videokamera an oder in der Nähe von einem optischen Äquivalent des Lichtsensors, so dass das dritte optische Relais ein Bild des Lichtmusters auf der hinteren Brennebene des Kollektors auf die Videokamera projiziert.

15. Verfahren nach Anspruch 14 umfassend den Schritt, in dem ein Strahlteiler (19) zwischen den drei optischen Relais bereitgestellt wird.

## Revendications

1. Dispositif optique destiné à être placé dans le trajet optique d'un microscope optique pour détecter des changements d'impulsion de lumière afin de mesurer des forces optiques agissant sur un échantillon optique (100) situé dans un milieu de suspension et placé sur la platine du microscope, comprenant un collecteur (10) ayant une ouverture numérique supérieure à l'index de réfraction nₘ dudit milieu de suspension afin de recueillir la lumière diffusée et non diffusée par l'échantillon, un capteur de lumière (15) placé dans ou près d'un équivalent optique du plan focal arrière du collecteur, et un premier relais optique (11) pour projeter la lumière recueillie par le collecteur sur le capteur de lumière, **caractérisé en ce que** le dispositif comprend en outre un deuxième relais optique (12) placé le long d'une trajectoire d'illumination et un élément de référence situé le long de ladite trajectoire d'illumination, étant la distance entre le deuxième relais optique et l'élément de référence telle que, lorsque l'élément de référence apparaît nettement au microscope, alors le diamètre du motif lumineux projeté sur le capteur de lumière est 2·f_{d}·nₘ, où f_{d} est la distance focale du dispositif.

2. Dispositif selon la revendication 1, dans lequel l'élément de référence est un iris (14) qui apparaît nettement au microscope lorsque la hauteur du dispositif au-dessus de l'échantillon est ajustée correctement.

3. Dispositif selon la revendication 1 ou 2, dans lequel le deuxième relais optique est placé dans ou près du plan focal arrière du collecteur.

4. Dispositif selon la revendication 3, dans lequel le diamètre du deuxième relais optique est supérieur à 2·f_{c}·nₘ, où f_{c} est la distance focale du collecteur.

5. Dispositif selon l'une quelconque des revendications précédentes, dans lequel le premier relais optique est situé hors de la trajectoire d'illumination du microscope.

6. Dispositif selon l'une quelconque des revendications précédentes, dans lequel les deux relais optiques sont tels que les aberrations sphériques introduites par ceux-ci sont compensées réciproquement, au moins en partie.

7. Dispositif selon l'une quelconque des revendications précédentes, étant le dispositif généralement en forme de T, étant la ligne de symétrie de la T parallèle à la trajectoire d'illumination du microscope entre le deuxième relais optique et l'élément de référence.

8. Dispositif selon la revendication 7, dans lequel le premier relais optique comprend un miroir concave.

9. Dispositif selon la revendication 8, dans lequel le premier relais optique et le capteur de lumière sont situés dans des côtés opposés de ladite ligne de symétrie.

10. Procédé de fabrication d'un dispositif selon l'une quelconque des revendications 1 à 9, comprenant l'étape de placer une marque de référence (16) dans ou près du plan focal arrière du collecteur ou d'un équivalent optique de celui-ci, de façon que le motif de la lumière recueillie dans ledit plan focal arrière se correspond avec ladite marque de référence.

11. Procédé selon la revendication 10, comprenant l'étape d'ajuster la distance entre le deuxième relais optique et l'élément de référence de façon que le motif de la lumière recueillie dans ledit plan focal arrière se correspond avec la marque de référence.

12. Procédé selon la revendication 11, dans lequel ledit ajustement est effectué en déplaçant le deuxième relais optique le long de son axe optique.

13. Procédé selon l'une quelconque des revendications 10 à 12, dans lequel la marque de référence est une plaque avec une marque circulaire de diamètre égal à 2·f_{c·}nm.

14. Procédé selon l'une quelconque des revendications 10 à 13, comprenant les étapes de :
• placer un troisième relais optique (13) dans ou près d'un équivalent optique du premier relais optique ;
• placer une caméra vidéo dans ou près d'un équivalent optique du capteur de lumière, de façon que le troisième relais optique projette une image du motif de lumière au plan focal arrière du collecteur sur la caméra vidéo.

15. Procédé selon la revendication 14, comprenant l'étape de fournir un séparateur de faisceau (19) entre les trois relais optiques.
